# EUROPEAN PATENT APPLICATION

(11) **EP 1 939 711 A2**
(43) Date of publication of application: **02.07.2008**
(21) Application number: 07107043.7
(22) Date of filing: 26.04.2007
(51) Int. Cl.: G06F 1/32

(54) **Portable player, power management apparatus, and power management alogorithm thereof**

(30) Priority: 28.12.2006 US 617196
(71) Applicant: MediaTek Inc., 1st Science-Based Industrial Park Hsin-Chu 300 (TW)
(72) Inventor: Chen, Kuan-Chou, 302, Hsinchu County (TW); Hsu, Hau-Jean, Hsinchu (TW); Shen, Chih-Hung, Taipei County (TW); Wu, Hua, 302, Hsinchu County (TW)
(74) Representative: Viering, Jentschura & Partner

(57) **Abstract**

A portable player, a power management apparatus, and a power management algorithm thereof are provided. The portable player comprises a plurality of functional blocks, a power management apparatus, and a display apparatus. The plurality of functional blocks are configured to complete a task. The power management apparatus comprises a sensor, a retrieval unit, and an adjuster. The sensor senses a power supplement status of the portable player. The retrieval unit retrieves a power consumption status of the task. The adjuster adjusts at least one of the plurality of functional blocks to complete the task according to the power supplement status and the power consumption status. The display apparatus displays the task.

## Description

### CROSS-REFERENCES TO RELATED APPLICATIONS

Not applicable

### BACKGROUND OF THE INVENTION

### Field of the Invention

The present invention relates to a portable player, a power management apparatus, and a power management algorithm thereof; in particular, the invention relates to a portable player, a power management apparatus, and a power management algorithm thereof for managing power consumption in order to finish specific tasks.

### Descriptions of the Related Art

Recently, portable video apparatuses that enable a user to watch multimedia files on the go have become common due to their convenience. However, this convenience is reduced because the limitations of the batteries used in these portable video apparatuses. Being limited to the battery capacity of the portable video apparatus, the user may not be able to finish watching a multimedia file if the battery runs out. IVloreover , any task that takes a portable device a substantial amount of time to complete also poses the same problem. A s a result, a solution to modulate power consumption of a portable device is urgently required.

### SUMMARY OF THE INVENTION

An object of this invention is to provide a power management apparatus for a system comprising a plurality of functional blocks to complete a task. The power management apparatus comprises a sensor, a retrieval unit, and an adjuster. The sensor senses a power supplement status of the system. The retrieval unit retrieves a power consumption status of the task. The adjuster adjusts at least one of the plurality of functional blocks to complete the task according to the power supplement status and the power consumption status.

Another object of this invention is to provide a power management algorithm for a system comprising a plurality of functional blocks to complete a task. The power management algorithm comprises the following steps of: sensing a power supplement status of the system; retrieving a power consumption status of the task; and adjusting at least one of the plurality of functional blocks to complete the task according to the power supplement status and the power consumption status.

Another object of this invention is to provide a portable player. The portable player comprises a plurality of functional blocks, a power management apparatus, and a display apparatus. The plurality of functional blocks are configured to complete a task. The power management apparatus senses a power supplement status of the portable player, retrieves a power consumption status of the task, and adjusts at least one of the plurality of functional blocks to complete the task according to the power supplement status and the power consumption status. The display apparatus displays the task.

Another object of this invention is to provide a power management apparatus for a system comprising a plurality of functional blocks to complete a task. The power management apparatus comprises: means for sensing a power supplement status of the system; means for retrieving a power consumption status of the task; and means for adjusting at least one of the plurality of functional blocks to complete the task according to the power supplement status and the power consumption status.

The present invention adjusts the power consumption of at least one of the functional blocks. A ccordingly, the task can be finished even if the original power is not enough for the task under normal condition and operations.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** shows a first embodiment in accordance with the present invention; and
**FIG. 2** shows a flow chart of a second embodiment in accordance with the present invention.

### DESCRIPTION OF THE PREFERRED EMBODIMENT

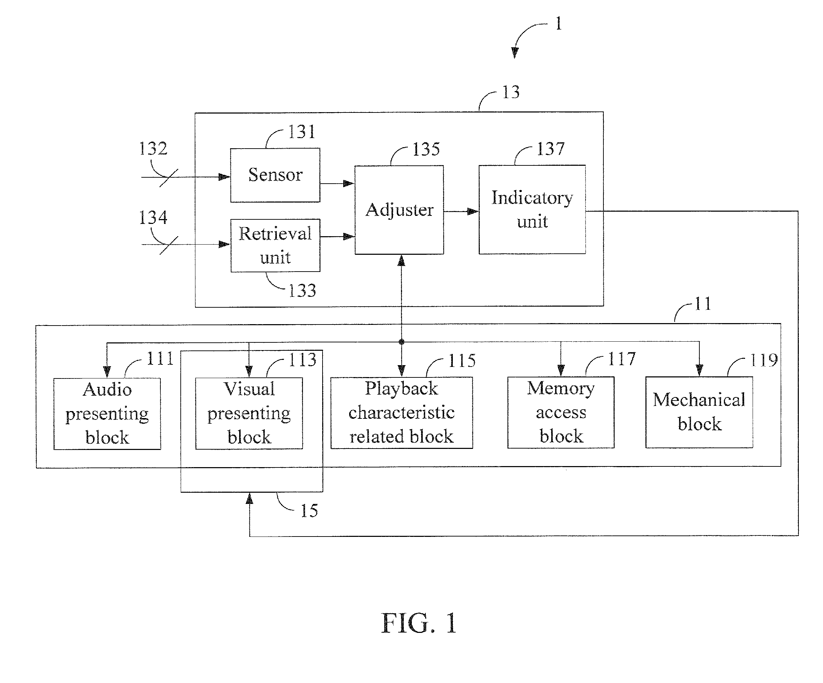

A first embodiment of the present invention is a portable player as shown in FIG. 1, which is a portable DVD player 1. The portable DVD player 1 comprises a plurality of functional blocks 11, a power management apparatus 13, and a display apparatus 15.

Each of the functional blocks 11 has a specific functionality, and each of the functional blocks 11 is configured to complete a task by performing its own function. In this embodiment, the task is multimedia playback of a DVD. The plurality of functional blocks 11 comprise an audio presenting block 111, a visual presenting block 113, a playback characteristic related block 115, a memory access block 117, and a mechanical block 119. The audio presenting block 111 is configured to play audio of the multimedia playback. The visual presenting block 113 is configured to display video of the multimedia playback. The playback characteristic related block 115 is configured to adjust playback characteristics video of the multimedia playback, such as fast forward playback, slow forward playback, fast backward playback, or slow backward playback. The memory access block 117 is configured to adjust memory access bandwidth. Finally, the mechanical block 119 is configured to control the mechanism related to the physical access of the DVD disc.

The power management apparatus 13 comprises a sensor 131, a retrieval unit 133, an adjuster 135, and an indicatory unit 137. The sensor 131 senses a power supplement status 132 of the portable DVD player 1, wherein the power supplement status 132 indicates remaining power of a battery of the portable DVD player 1.

The retrieval unit 133 then retrieves a power consumption status 134 which indicates power consumption required to complete the multimedia playback. The power consumption status 134 would be determined according to the file size of the video, the attached files of the video, etc. In the embodiment, the power consumption status 134 is determined before the portable DVD player 1 starts to execute the multimedia playback in order for the power management apparatus 13 to adjust the power consumption of at least one of the functional blocks 11. For example, when the DVD disc is inserted into the portable DVD player 1, the retrieval unit 133 calculates the power consumption required for completing the multimedia playback according to the size of the multimedia playback.

Alternatively, the power consumption status 134 may be retrieved after the multimedia playback starts. In this case, the retrieval unit 133 may operate periodically, i.e. calculate the current power consumption periodically. After this calculation, the adjuster 135 may adjust at least one of the functional blocks 11 dynamically according to both the power supplement status 132 and the power consumption status 134 to complete the multimedia playback.

If the power management apparatus 13 determines that the remaining power in the battery of the portable DVD player 1 is not sufficient to supply the power consumption indicated by the power consumption status 134, the adjuster 135 adjusts at least one of the functional blocks 11 to decrease the power consumption during the multimedia playback. The power consumption of the portable DVD player 1 is then reduced to complete the multimedia playback.

In another case, if the power management apparatus 13 determines that the remaining power is more than the power requirement to complete the multimedia playback, the adjuster 135 may adjust at least one of the functional blocks 11 to increase power consumption during the multimedia playback, if the user requires, so that the remaining power is uniformly allocated throughout the multimedia playback until it is finished. In this situation, the battery can be recharged immediately following the completion of the multimedia playback.

The adjuster 135 may change the power consumption in various ways, First, it may adjust the volume of the audio presenting block 111, which may be a speaker or an earphone. When the power supplement status 132 indicates that the power supplement in the battery of the portable DVD player 1 is not enough to supply the power consumption indicated by the power consumption status 134 to complete the multimedia playback, the volume of the audio presenting block 111 is turned down by the adjuster 135 to decrease the power consumption. Conversely, when the power supplement status 132 indicates that the power supplement in the battery is more than the power consumption for completing the multimedia playback and the user would like to consume all of the power supplement during the multimedia playback, the volume of the audio presenting block 111 is turned up by the adjuster 135 to increase the power consumption.

The adjuster 135 may adjust brightness of the visual presenting block 113, wherein the visual presenting block 113 can be a part of the display unit 15. The visual presenting block 113 may be, for example, a LCD screen or a CRT screen. When the power supplement status 132 indicates that the power supplement in the battery is not enough to supply the power consumption indicated by the power consumption 134, the brightness of the visual presenting block 113 is dimmed by the adjuster 135 to decrease the power consumption so that there may be sufficient power to complete multimedia playback. Conversely, when the power supplement status 132 indicates that the power supplement in the battery is more than the power consumption for completing the multimedia playback and the user would like to consume all of the power supplement during the multimedia playback, the brightness of the visual presenting block 113 is adjusted brighter by the adjuster 135 to increase the power consumption.

The adjuster 135 may adjust the playback speed of the playback characteristic related block 115, wherein the playback characteristic related block 115 is configured to accelerate or decelerate the playback speed. When the power supplement status 132 indicates that the power supplement in the battery is not enough to supply the power consumption indicated by the power consumption status 134, the playback speed is accelerated slightly by the adjuster 135 to decrease the power consumption so that the multimedia playback can be finished before the power supply is depleted. However, if the power supplement status 132 indicates that the power supplement in the battery is more than the power consumption required for completing the multimedia playback and the user would like to consume all of the power supplement in the multimedia playback, the playback speed is decelerated by the adjuster 135 to increase the power consumption.

The adjuster 135 may adjust a memory access bandwidth of the memory access block 117. The memory of the portable DVD player 1 may be DRAM or a flash memory. When the power supplement status 132 indicates that the power supplement in the battery is not enough to supply the power consumption indicated by the power consumption status 134 to complete the multimedia playback, the memory access bandwidth is decreased slightly by the adjuster 135 to decrease the power consumption. However, if the power supplement status 132 indicates that the power supplement in the battery is more than the power consumption required for completing the multimedia playback and the user would like to consume all of the power supplement in the multimedia playback, the memory access bandwidth of the memory access block 117 is increased by the adjuster 135 to increase the power consumption.

The adjuster 135 may adjust the motor spindle speed of the mechanical block 119, wherein the mechanical block 119 is a motor to rotate the DVD disc. When the power supplement status 132 indicates that the power supplement in the battery is not enough to supply power consumption indicated by the power consumption status i 34, the motor spindle speed is decelerated slightly by the adjuster 135 to decrease the power consumption so that the multimedia playback can be finished. Conversely, when the power supplement status 132 indicates that the power supplement in the battery is more than the power consumption required for completing the multimedia playback and the user would like to consume all of the power supplement in the multimedia playback, the motor spindle speed of the mechanical block 119 is accelerated by the adjuster 135 to increase the power consumption.

The adjuster 135 may adjust the functional blocks 11 according to predetermined priorities of the functional blocks 11. In the embodiment, the predetermined priorities are decided according to the amount of power consumption and the affect of playback quality when one of the functional blocks 11 is adjusted. The predetermined priorities of this embodiment are ranked as follows: the brightness of the visual block 113, the volume of the audio presenting block 111, the playback speed of the playback characteristic related block 115, the memory access bandwidth of the memory access block 117, and the motor spindle speed of the mechanical block 119. The adjuster 135 selects the particular number of the functional blocks 11 to adjust according to the power supplement status 132, the power consumption status 134, and the predetermined priorities. The following scenario illustrates an example.

When the power supplement status 132 indicates that the battery is not enough to supply the power consumption, the adjuster 135 adjusts the brightness of the visual block 113 first. If the power consumption after the adjustment is still too large, the adjuster 135 then adjusts the volume of the audio presenting block 111 and/or further functional blocks 11 until the power supplement can sufficiently support the power consumption after the adjustment.

If the portable DVD player 1 is still unable to complete the multimedia playback after the adjustments, the adjuster 135 sends a signal to the indicatory unit. In response to the signal, the indicatory unit 137 would generate an indicator to inform the user. The indicator may be presented in the beginning of the multimedia playback or during the multimedia playback. The indicator can be an audio alarm and/or a visual message. In the embodiment, the indicator is a visual message. More particularly, the visual message is an on-screen-display (OSD) displayed via the visual presenting unit 113 of the display unit 15. Therefore, the user may decide whether or not to continue executing the multimedia playback.

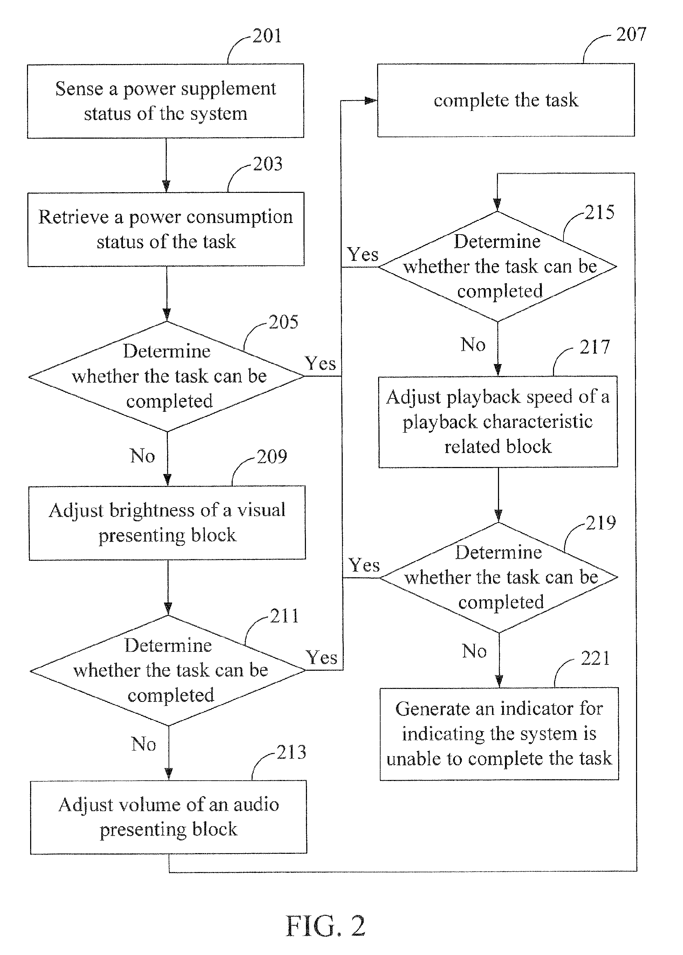

A second embodiment of the present invention is a power management algorithm for a system comprising a plurality of functional blocks to complete a task. The system of the second embodiment is as noted in the first embodiment. FIG. 2 shows a flow chart of this algorithm. In step 201, sensing a power supplement status of the system is executed. In step 203, retrieving a power consumption status of the task is executed. Step 205 is then executed to determine whether the task can be completed according to the power supplement status and the power consumption status. If yes, step 207 is executed to complete the task. If not, step 209 is then executed wherein brightness of a visual presenting block is adjusted. Then step 211 is executed to determine whether the task can be completed. If so, the algorithm goes to step 207. If not, step 213 is then executed wherein volume of an audio presenting block is adjusted. Then step 215 is executed to determine whether the task can be completed. If so, the algorithm proceeds to step 207. If not, step 217 is then executed wherein a playback speed of a playback characteristic related block is adjusted. Then step 219 is executed to determine whether the task can be completed. If so, the algorithm goes to step 207. If not, step 221 is then executed to generate an indicator that the system is unable to complete the given task.

In addition to the steps shown in FIG. 2, the second embodiment is able to execute all of the operations or functions recited in the first embodiment. Those skilled in the art will be able to realize how the second embodiment performs these operations and functions based on the above descriptions of the first embodiment. Therefore, the descriptions for these operations and functions are redundant and not repeated herein.

In addition to a portable DVD player, systems that can utilize the present invention may include and are not limited to a TV receiver, a mobile communication device, an optical disk driver, or a laptop. For example, if the system contains an optical disk drive, the given task is optical disk operation. If the system is a digital TV receiver, the task is to playback one program obtained from an electronic program guide (EPG). The retrieval unit 133 calculates the power consumption of the program according to its broadcasting time.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A power management apparatus for a system comprising a plurality of functional blocks to complete a task, comprising:
a sensor for sensing a power supplement status of the system;
a retrieval unit for retrieving a power consumption status of the task; and
an adjuster for adjusting at least one of the plurality of functional blocks to complete the task according to the power supplement status and the power consumption status.

2. The power management apparatus as claimed in claim 1, wherein the power supplement status is remaining power of a battery of the system.

3. The power management apparatus as claimed in claim 1, wherein the power consumption status is determined before the system starts to execute the task.

4. The power management apparatus as claimed in claim 3, wherein the task is obtained from an EPG

5. The power management apparatus as claimed in claim 1, wherein the power consumption status is retrieved after the system starts to execute the task.

6. The power management apparatus as claimed in claim 1, wherein one of the plurality of functional blocks is an audio presenting block.

7. The power management apparatus as claimed in claim 6, wherein the adjuster adjusts volume of the audio presenting block.

8. The power management apparatus as claimed in claim 1, wherein one of the plurality of functional blocks is a visual presenting block.

9. The power management apparatus as claimed in claim 8, wherein the adjuster adjusts brightness of the visual presenting block.

10. The power management apparatus as claimed in claim 1, wherein one of the plurality of functional blocks is a playback characteristic related block.

11. The power management apparatus as claimed in claim 10, wherein the adjuster adjusts a playback speed of the playback characteristic related block.

12. The power management apparatus as claimed in claim 1, wherein one of the plurality of functional blocks is a memory access block.

13. The power management apparatus as claimed in claim 12, wherein the adjuster adjusts one of a DRAM access bandwidth and a flash memory access bandwidth of the memory access block.

14. The power management apparatus as claimed in claim 1, wherein one of the plurality of functional blocks is a mechanical block.

15. The power management apparatus as claimed in claim 14, wherein the adjuster adjusts a motor spindle speed of the mechanical block.

16. The power management apparatus as claimed in claim 1, wherein the task is an optical disk operation.

17. The power management apparatus as claimed in claim 1, wherein the task is a multimedia playback.

18. The power management apparatus as claimed in claim 1, wherein the system is a TV receiver.

19. The power management apparatus as claimed in claim 1, wherein the system is a mobile communication device.

20. The power management apparatus as claimed in claim 1, wherein the adjuster adjusts to accelerate power consumption of the system.

21. The power management apparatus as claimed in claim 1, wherein the adjuster adjusts to decelerate power consumption of the system.

22. The power management apparatus as claimed in claim 1, further comprising a indicatory unit for generating an indicator if the system is unable to complete the task.

23. The power management apparatus as claimed in claim 22, wherein the indicator is one of a visual message and an auditive message.

24. A power management algorithm for a system comprising a plurality of functional blocks to complete a task, comprising:
sensing a power supplement status of the system;
retrieving a power consumption status of the task; and
adjusting at least one of the plurality of functional blocks to complete the task according to the power supplement status and the power consumption status.

25. The power management algorithm as claimed in claim 24, wherein the power supplement status is remaining power of a battery of the system.

26. The power management algorithm as claimed in claim 24, wherein the power consumption status is determined before the system starts to execute the task.

27. The power management algorithm as claimed in claim 26, wherein the task is obtained from an EPG.

28. The power management algorithm as claimed in claim 24, wherein the power consumption status is retrieved after the system starts to execute the task.

29. The power management algorithm as claimed in claim 24, wherein one of the plurality of functional blocks is an audio presenting block.

30. The power management algorithm as claimed in claim 29, wherein the adjusting step comprises a step of adjusting volume of the audio presenting block.

31. The power management algorithm as claimed in claim 24, wherein one of the plurality of functional blocks is a visual presenting block.

32. The power management algorithm as claimed in claim 31, wherein the adjusting step comprises a step of adjusting brightness of the visual presenting block.

33. The power management algorithm as claimed in claim 24, wherein one of the plurality of functional blocks is a playback characteristic related block.

34. The power management algorithm as claimed in claim 33, wherein the adjusting step comprises a step of adjusting a playback speed of the playback characteristic related block.

35. The power management algorithm as claimed in claim 24, wherein one of the plurality of functional blocks is a memory access block.

36. The power management algorithm as claimed in claim 35, wherein the adjusting step comprises a step of adjusting one of a DRAM access bandwidth and a flash memory access bandwidth of the memory access block.

37. The power management algorithm as claimed in claim 24, wherein one of the plurality of functional blocks is a mechanical block.

38. The power management algorithm as claimed in claim 37. wherein the adjusting step comprises a step of adjusting a motor spindle speed of the mechanical block.

39. The power management algorithm as claimed in claim 24, wherein the task is an optical disk operation.

40. The power management algorithm as claimed in claim 24, wherein the task is a multimedia playback.

41. The power management algorithm as claimed in claim 24, wherein the system is a TV receiver.

42. The power management algorithm as claimed in claim 24, wherein the system is a mobile communication device.

43. The power management algorithm as claimed in claim 24, wherein the adjusting step accelerates power consumption of the system.

44. The power management algorithm as claimed in claim 24, wherein the adjusting step decelerates power consumption of the system.

45. The power management algorithm as claimed in claim 24, further comprising a step of generating an indicator if the system is unable to complete the task.

46. The power management algorithm as claimed in claim 45, wherein the indicator is one of a visual message and an auditive message.

47. A portable player, comprising:
a plurality of functional blocks for completing a task;
a power management apparatus for sensing a power supplement status of the portable player, for retrieving a power consumption status of the task, and for adjusting at least one of the plurality of functional blocks to complete the task according to the power supplement status and the power consumption status; and
a display apparatus for displaying the task.

48. A power management apparatus for a system comprising a plurality of functional blocks to complete a task, comprising:
means for sensing a power supplement status of the system;
means for retrieving a power consumption status of the task; and
means for adjusting at least one of the plurality of functional blocks to complete the task according to the power supplement status and the power consumption status.
